(19) Europäisches Patentamt / European Patent Office / Office européen des brevets

(11) **EP 4 779 729 A1**

(12) **EUROPEAN PATENT APPLICATION**
published in accordance with Art. 153(4) EPC

(43) Date of publication:
**22.07.2026 Bulletin 2026/30**

(21) Application number: **24882744.6**

(22) Date of filing: **18.10.2024**

(51) International Patent Classification (IPC):
**H01M 8/04119** (2016.01)   **B01D 63/02** (2006.01)
**B01D 67/00** (2006.01)   **H01M 8/10** (2016.01)

(52) Cooperative Patent Classification (CPC):
**B01D 63/02; B01D 67/00; H01M 8/04119;**
**H01M 8/10; Y02E 60/50; Y02P 70/50**

(86) International application number:
**PCT/KR2024/015888**

(87) International publication number:
**WO 2025/089717 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 26.10.2023  KR 20230145098
17.10.2024  KR 20240142303

(71) Applicant: **Kolon Industries, Inc.**
**Seoul 07793 (KR)**

(72) Inventors:
• **LEE, Seung Hwan**
**Seoul 07793 (KR)**
• **OH, Young Seok**
**Seoul 07793 (KR)**
• **LEE, Ji Yoon**
**Seoul 07793 (KR)**

(74) Representative: **Vossius & Partner**
**Patentanwälte Rechtsanwälte mbB**
**Siebertstraße 3**
**81675 München (DE)**

(54) **HOLLOW FIBER MEMBRANE FOR FUEL CELL MEMBRANE HUMIDIFIER, METHOD FOR MANUFACTURING SAME, AND FUEL CELL MEMBRANE HUMIDIFIER INCLUDING SAME**

(57)   The present disclosure relates to a hollow fiber membrane for a fuel cell membrane humidifier, a method of preparing the same, and a fuel cell membrane humidifier including the hollow fiber membrane, wherein the hollow fiber membrane includes a hollow fiber-type porous support which includes an inner surface region and an outer surface region, wherein the inner surface region includes a first polymer, and the outer surface region includes a second polymer, a crown ether-based compound, and an antioxidant.

FIG. 1

EP 4 779 729 A1

## Description

## Technical Field

The present disclosure relates to a hollow fiber membrane for a fuel cell membrane humidifier, a method of preparing the same, and a fuel cell membrane humidifier including the hollow fiber membrane, and more specifically, to an oxidation-resistant hollow fiber membrane having resistance to radicals and peroxides, and a fuel cell membrane humidifier including the same.

## Background Art

Fuel cells are power-generating cells that convert the chemical energy of hydrogen and oxygen into electrical energy through an electrochemical reaction. Unlike general chemical cells such as dry cells or storage cells, fuel cells have advantages in that the fuel cells may continuously generate electricity as long as hydrogen and oxygen are supplied, and have no heat loss and thus have about twice the efficiency of internal combustion engines.

In addition, since hydrogen and oxygen are used as raw materials to generate water as a product, fuel cells are environmentally friendly power generation devices that do not generate pollutants. Therefore, fuel cells have advantages of being not only environmentally friendly but also reducing concerns about resource depletion due to an increase in energy consumption.

Fuel cells may be classified into polymer electrolyte membrane fuel cells (PEMFCs), phosphoric acid fuel cells (PAFCs), molten carbonate fuel cells (MCFCs), solid oxide fuel cells (SOFCs), and alkaline fuel cells (AFCs).

Among the fuel cells, the PEMFCs are known to be suitable for use in transportation systems because they can operate at lower temperatures and have a higher power density than other fuel cells.

Meanwhile, during driving of PEMFCs, generally, 2 moles of hydrogen react with 1 mole of oxygen in a fuel cell stack to form water. However, when an incomplete reaction occurs, in some cases, byproducts such as peroxides or hydroxyl radicals may be generated.

There is a problem in that when peroxides or hydroxyl radicals generated in this way flow from a fuel cell stack to a membrane humidifier, the peroxides or hydroxyl radicals cause oxidation of an organic hollow fiber membrane in the membrane humidifier to decompose and deteriorate the hollow fiber membrane.

Decomposition and deterioration of a hollow fiber membrane impede sufficient delivery of humidified air to a fuel cell stack, thereby reducing the efficiency of the fuel cell stack and all fuel cells.

Accordingly, there is an industrial demand for a hollow fiber membrane which is suppressed from being decomposed by peroxides or hydroxyl radicals.

## Disclosure of Invention

## Technical Problem

The present disclosure provides an oxidation-resistant hollow fiber membrane having resistance to oxidative materials such as peroxides or hydroxyl radicals, and a membrane humidifier for a fuel cell, including the same.

## SOLUTION TO PROBLEM

According to an aspect, provided is a hollow fiber membrane for a fuel cell membrane humidifier, the hollow fiber membrane including a hollow fiber-type porous support which includes an inner surface region and an outer surface region, wherein the inner surface region includes a polymer, and the outer surface region includes a polymer, a crown ether-based compound, and an antioxidant.

According to another aspect, provided is a method of preparing a hollow fiber membrane for a fuel cell humidifier, the method including preparing a first dope solution including a first polymer, preparing a second dope solution including a second polymer, a crown ether-based compound, and an antioxidant, supplying the first dope solution to an inner nozzle of a triple-tubular spinneret, and supplying the second dope solution to an outer nozzle of the triple-tubular spinneret, discharging the first dope solution and the second dope solution from the triple-tubular spinneret into a coagulation bath, and coagulating, in the coagulation bath, a spinning solution which has been discharged into the coagulation bath, and then winding and drying a coagulated resultant to obtain a hollow fiber membrane.

According to another aspect, provided is a membrane humidifier for a fuel cell, including the hollow fiber membrane.

## Advantageous Effects of Invention

Since a hollow fiber membrane for a fuel cell membrane humidifier provided according to an aspect includes an inner surface region and an outer surface region, and the outer surface region includes a crown ether-based compound and an antioxidant, there is an effect of, while minimizing a degradation in moisture exchange performance, suppressing chemical deterioration of the hollow fiber membrane due to oxides generated from a fuel cell stack to enter the inside of the membrane humidifier when a fuel cell is driven. As a result, the durability of a fuel cell system is improved.

## BRIEF DESCRIPTION OF DRAWINGS

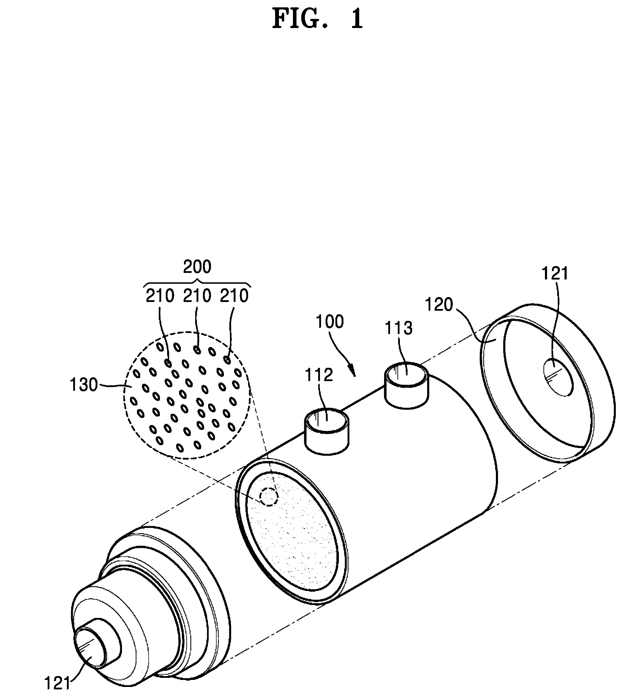

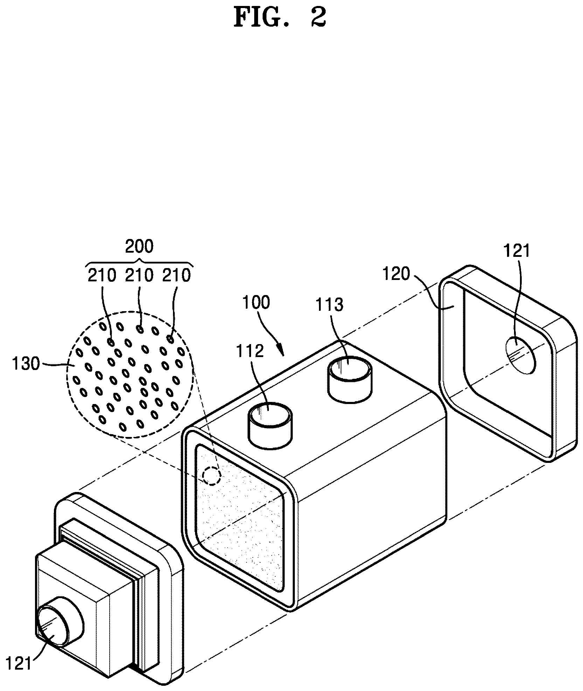

FIGS. 1 and 2 are exploded perspective views of a humidifier for a fuel cell, according to an embodiment.

## Best Mode for Carrying out the Invention

## Mode for the Invention

Hereinafter, as the present inventive concept allows for various changes and numerous embodiments, specific embodiments will be illustrated in the drawings and described in detail in the written description. However, this is not intended to limit the present inventive concept to particular modes of practice, and it is to be appreciated that all changes, equivalents, and substitutes that do not depart from the spirit and technical scope are encompassed in the present inventive concept.

The terms used herein are merely used to describe specific embodiments and are not intended to limit the present inventive concept. An expression used in the singular encompasses the expression of the plural, unless it has a clearly different meaning in the context. As used herein, it is to be understood that the terms such as "including," "having," and "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added.

Throughout the specification, it will be understood that when a component, such as a layer, a film, a region, or a plate, is referred to as being "on" another component, the component may be directly on the other component or intervening components may be present thereon. Throughout the specification, while such terms as "first," "second," and the like may be used to describe various components, such components should not be limited to the above terms. The above terms are used only to distinguish one component from another.

The term "polymer" as used herein refers to a polymer formed by polymerization of one or more monomer units and has a meaning encompassing polymer resins and polymer macromolecules.

The term "main chain" as used herein may refer to a basic framework of a compound, and for example, a main chain of a crown ether compound may indicate a structure that forms a ring.

The term "side chain" as used herein may refer to a substituent or monomer unit bonded to a main chain of a compound, and for example, a side chain of a crown ether compound may indicate a substituent bonded to a ring structure or a monomer unit bonded to the ring structure and extending outward.

Embodiments set forth herein are merely examples and various changes may be made therein.

A hollow fiber membrane for a fuel cell membrane humidifier according to an aspect is a hollow fiber-type porous support including an inner surface region and an outer surface region, wherein the inner surface region includes a first polymer, and the outer surface region includes a second polymer, a crown ether-based compound, and an antioxidant. In this case, the first polymer may be identical to or different from the second polymer.

The inventors of the present disclosure have attempted to prepare a hollow fiber membrane by adding an antioxidant to a dope solution in order to solve the technical problem of improving the durability of the hollow fiber membrane. However, when an amount of a metal-based antioxidant has exceeded a certain amount, it has been difficult to uniformly disperse the metal-based antioxidant in a dope, and also there has been a process problem due to a clogging phenomenon of a discharge outlet. In addition, there has always been a problem in that the metal-based antioxidant has blocked some of pores of the hollow fiber membrane, resulting in failure to achieve moisture exchange performance required for a fuel cell membrane humidifier.

In order to solve these problems, the inventors of the present invention have used a metal-based antioxidant together with a crown ether-based compound, thereby enabling uniform dispersion in a dope and enabling uniform distribution in a hollow fiber membrane after the formation of a membrane to provide sufficient oxidation resistance to an entire hollow fiber membrane. Nonetheless, due to the inherently large molecular size of the crown ether-based compound, pores have been closed after the formation of a membrane, which has caused limitations on amounts of the crown ether-based compound and the antioxidant. As a result, it has still been difficult to form a hollow fiber membrane that has sufficient moisture exchange performance and oxidation resistance for use in a fuel cell membrane humidifier.

Meanwhile, the inventors of the present disclosure have found that when a hollow fiber membrane is formed by using a triple-tubular nozzle, a dope including a crown ether-based compound and an antioxidant is provided only to a nozzle for forming an outer surface region, and a dope including a polymer is provided to a nozzle for forming an inner surface region to discharge a dope solution into a coagulation bath, a hollow fiber membrane in which the outer surface region includes the crown ether-based compound and the antioxidant may be obtained. Surprisingly, as compared to hollow fiber membranes of a related art, which do not include a crown ether-based compound and an antioxidant, it has been confirmed that, in such a hollow fiber membrane, moisture exchange performance is not reduced, and also an outer surface has resistance to oxidative materials. From this perspective, the present invention has been completed.

According to an embodiment, the inner surface region may be defined as a region from an inner surface, which defines a hollow region of the hollow fiber-type porous support through which external air passes, to a point corresponding to 10 % to 90 % of a thickness of the hollow fiber-type porous support, and the outer surface region may be defined as a region from a surface, which is opposite to the inner surface, to a point corresponding to 10 % to 90 % of the thickness of the hollow fiber-type porous support.

The inner surface region and the outer surface region may be appropriately adjusted according to a thickness of a nozzle, a discharge speed, and the like.

For example, the inner surface region may be defined as a region from the inner surface to a point corresponding 20 % to 80 %, 30 % to 70 %, 40 % to 60 %, or 50 % of the thickness of the hollow fiber-type porous support, and the outer surface region may be defined as a region from the outer surface to a point corresponding 20 % to 80 %, 30 % to 70 %, 40 % to 60 %, or 50 % of the thickness of the hollow fiber-type porous support.

According to an embodiment, the inner surface region may be free of an inorganic material. For example, the inner surface region may consist of or be formed of an organic material.

According to an embodiment, the hollow fiber-type porous support may further include an intermediate region between the inner surface region and the outer surface region, and the intermediate region may include at least one of a crown ether-based compound and an antioxidant.

For example, the intermediate region may include a crown ether-based compound and an antioxidant. It is thought that the intermediate region has been formed as the crown ether-based compound and the antioxidant diffuse toward an inner surface during phase transition of a spinning solution in a coagulation process after discharge through a triple tube.

According to an embodiment, a concentration of at least one of the crown ether-based compound and the antioxidant in the intermediate region may increase from a region adjacent to the inner surface region to a region adjacent to the outer surface region.

According to another embodiment, the concentration of at least one of the crown ether-based compound and the antioxidant in the intermediate region may increase from the region adjacent to the outer surface region to the region adjacent to the inner surface region.

By including such an intermediate region, a significant deterioration in moisture exchange performance of the hollow fiber membrane for a fuel cell membrane humidifier according to an embodiment may be suppressed, and also an oxidative material may be effectively prevented from penetrating into the hollow fiber membrane, thereby improving oxidation resistance.

According to an embodiment, the first polymer and the second polymer may each independently include a polyvinylidene fluoride (PVDF)-based polymer, a polysulfone-based polymer, a sulfonated polysulfone, cellulose acetate, cellulose triacetate, polymethyl methacrylate, Nafion, a polystyrene (PS)-based polymer, a polytetrafluoroethylene (PTFE)-based polymer, a perfluorosulfonic acid (PFSA)-based polymer, a polyphenylsulfone-based polymer, a polyethersulfone (PES)-based polymer, a polyacrylonitrile (PAN)-based polymer, a polyetherimide (PEI)-based polymer, a polyimide (PI)-based polymer, or any combination thereof.

For example, the first polymer and the second polymer may each include a PES-based polymer.

The first polymer and the second polymer may be different from each other and may be appropriately selected according to desired physical properties related to durability and elongation of the hollow fiber membrane.

According to an embodiment, the hollow fiber-type porous support may have a thickness of 40 to 300 $\mu$m. For example, the hollow fiber-type porous support may have a thickness of 100 to 250 $\mu$m or 150 to 200 $\mu$m. When the thickness of the hollow fiber-type porous support according to an embodiment of the present disclosure satisfies the above range, the hollow fiber-type porous support may have sufficient durability and moisture exchange performance to be applied to a hollow fiber membrane for a membrane humidifier.

According to an embodiment, the hollow fiber-type porous support may have a plurality of pores having various diameters.

The porosity of the hollow fiber-type porous support may be calculated according to Equation 1 based on a ratio of an air volume in a porous support to the total volume of the porous support. In this case, the total volume may be calculated by manufacturing a rectangular sample and measuring a width, length, and thickness thereof, and the air volume may be obtained by measuring a mass of the sample and then subtracting, from the total volume, a polymer volume that is calculated inversely from a density.

Porosity (%) = (air volume in porous support/total volume of porous support) × 100          Equation 1

According to an embodiment, the porosity of the hollow fiber-type porous support may be in a range of 30 to 90 %. For example, the porosity of the hollow fiber-type porous support may be in a range of 60 to 85 %.

When the porosity of the hollow fiber-type porous support satisfies the above range, the hollow fiber-type porous support may have good physical properties such as gas permeability and shape stability and thus may be applied to a hollow fiber membrane for a membrane humidifier.

According to an embodiment, the hollow fiber-type porous support may include a plurality of micropores. The micropores may have a diameter of about 0.01 to 1 $\mu$m.

According to an embodiment, the inner surface region may have a thickness of 30 to 270 $\mu$m. For example, the inner surface region may have a thickness of 30 to 250 $\mu$m, 50 to 200 $\mu$m, 80 to 150 $\mu$m, or 100 to 130 $\mu$m. When the thickness of the inner surface region satisfies the above range, sufficient physical durability of the hollow fiber membrane may be ensured.

According to an embodiment, a thickness of the outer surface region is in a range of 30 to 270 $\mu$m, but is not particularly limited as long as the thickness is in a range that does not close the pores present in the hollow fiber-type porous support or does not degrade moisture exchange performance. For example, the outer surface region may have a thickness of 30 to 250 $\mu$m, 50 to 200 $\mu$m, 80 to 150 $\mu$m, or 100 to 130 $\mu$m. When the thickness of the outer surface region satisfies the above range, without a degradation in moisture exchange performance of the hollow fiber membrane, the hollow fiber membrane may be sufficiently protected from an oxidative material.

According to an embodiment, the crown ether-based compound may be divided into a main chain and a side chain, and the main chain of the crown ether-based compound may include a molecular structure represented by Formula 1 below.

## Formula 1

### 3n-crown-n

In Formula 1, n is a positive integer from 4 to 8.

According to an embodiment, the side chain of the crown ether-based compound may include a second hydrophilic functional group. The second hydrophilic functional group may include a hydroxyl group, a carboxyl group, an amine group, or any combination thereof.

For example, the crown ether-based compound may include a 18-crown-6-2,3,11,12-tetracarboxylic acid, 2-aminomethyl-18-crown-6, 4'-aminobenzo-18-crown-6, 2-hydroxymethyl-18-crown-6, or a combination thereof, but one or more embodiments are not limited thereto.

According to an embodiment, the crown ether-based compound may be included in an amount of 0.1 parts by weight to 5 parts by weight with respect to 100 parts by weight of the second polymer. For example, the crown ether-based compound may be included in an amount of 0.5 to 5 parts by weight, 1 to 4 parts by weight, or 1.5 to 3 parts by weight with respect to 100 parts by weight of the second polymer, but one or more embodiments are not limited thereto. When the crown ether-based compound is included in the above amount, since a metal-based antioxidant may be prevented from deviating from the outer surface region without impairing the moisture permeability of the hollow fiber membrane, oxidation resistance may be improved.

According to an embodiment, the antioxidant may include a metal-based antioxidant. For example, as the metal-based antioxidant, any antioxidant may be used without limitation as long as the antioxidant is a compound or metal salt capable of providing metal ions capable of capturing and/or decomposing radicals and hydrogen peroxides.

According to an embodiment, the metal-based antioxidant may include compounds capable of releasing at least one ion of a cerium ion, a nickel ion, a tungsten ion, a cobalt ion, a chromium ion, a zirconium ion, a yttrium ion, a manganese ion, an iron ion, a titanium ion, a vanadium ion, a silicon ion, a molybdenum ion, a lanthanum ion, a neodymium ion, a silver ion, a platinum ion, a ruthenium ion, a palladium ion, and a rhodium ion, or any combination of such compounds.

For example, the metal-based antioxidant may be a metal salt formed through ion bonding between such a metal ion and a nitrate anion, a halogen anion, an oxygen anion, or a sulfate anion. Examples of the metal salt may include a salt of Ce metal such as $Ce(NO_3)_3$, $CeCl_3$, or $Ce_2(SO_4)_3$, a salt of Mn metal such as $Mn(NO_3)$, a metal oxide such as $CeO_2$, $CeSiO_2$, $MnO_2$, or $TiO_2$, or any mixture thereof. However, one or more embodiments are not limited thereto. Any metal salt capable of capturing and/or decomposing an oxidative material may be applied.

According to an embodiment, the antioxidant may include a metal-based antioxidant, and the antioxidant may be included in an amount of 0.1 parts by weight to 5 parts by weight with respect to 100 parts by weight of the second polymer.

For example, the antioxidant may be included in an amount of 1 to 5 parts by weight, 1.5 to 4.5 parts by weight, or 2 to 4 parts by weight with respect to 100 parts by weight of the second polymer, but one or more embodiments are not limited thereto. When the antioxidant is included in the above amount, chemical deterioration of the hollow fiber membrane due to an oxidative material may be suppressed without impairing the moisture permeability of the hollow fiber membrane.

According to an embodiment, the crown ether-based compound and the antioxidant may be included in a weight ratio of 1:1 to 1:2. For example, the crown ether-based compound and the antioxidant may be included in a weight ratio of 1:1.1 to 1:1.9, 1:1.2 to 1:1.8, 1:1.3 to 1:1.7, 1:1.4 to 1:1.6, or 1:1.5. Since the crown ether-based compound and the antioxidant are included in the weight ratio of the above range, the antioxidant is sufficiently captured in the crown ether-based compound to be prevented from flowing out from the hollow fiber membrane, thereby obtaining sufficient oxidation resistance.

Meanwhile, when an amount of the crown ether-based compound is significantly low, the antioxidant is easily eluted and lost from an oxidation-resistant membrane, which degrades the long-term oxidation resistance of the hollow fiber membrane, and when an amount of the antioxidant is significantly low, it is difficult to impart sufficient oxidation resistance to the hollow fiber membrane. In addition, when the amount of the crown ether-based compound or the antioxidant is excessively high, the crown ether-based compound or the antioxidant acts as an impurity in the hollow fiber membrane to cause a deterioration in physical properties such as a deterioration in moisture permeability and gas permeability of the hollow fiber membrane.

According to an embodiment, in addition to the metal-based antioxidant, the antioxidant may further include an organic-based antioxidant, an organo-metallic antioxidant, a hindered amine light stabilizer (HALS), a sulfur-based antioxidant, a phosphorus-based antioxidant, or a combination thereof.

For example, the organic-based antioxidant may include a coumaric acid, dopamine, hydroquinone, phenolphthalein, a phthalic acid, an acetylsalicylic acid, a phenol-based antioxidant, niacin, luminol, urea, a phytic acid, glyoxal, or any mixture thereof.

For example, the organometallic antioxidant may include a Ce-crown complex, a Ce-phosphoric acid complex, a Ce-bypyridine, or any mixture thereof.

According to an embodiment, when one or more of a metal-based antioxidant, an organic antioxidant, an organo-metallic antioxidant, a HALS, a sulfur-based antioxidant, and a phosphorus-based antioxidant are used together as an antioxidant, the antioxidant may be used within the above-described amount range of the antioxidant.

According to an embodiment, at least one antioxidant selected from an organic-based antioxidant, an organo-metallic antioxidant, a HALS, a sulfur-based antioxidant, and a phosphorus-based antioxidant may be dispersed and present within a polymer structure forming the hollow fiber-type porous support.

According to an embodiment, the hollow fiber membrane may further include an additive such as a surfactant, a hydrophilic organic compound, or a hydrophilic polymer. The additive may be selected and added in an appropriate amount within a range that does not impair the original physical properties of the hollow fiber membrane. It will be apparent to those of ordinary skill in the art that materials commonly used in the preparation of a hollow fiber membrane may also be used.

Even when the above-described antioxidant for improving durability is introduced, the hollow fiber membrane has sufficient moisture exchange performance and gas permeability and thus is suitable for use in a fuel cell humidifier with improved durability without deterioration in humidification performance.

A method of preparing a hollow fiber membrane according to an aspect may include preparing a first dope solution including a first polymer, preparing a second dope solution including a second polymer, a crown ether-based compound, and an antioxidant; supplying the first dope solution to an inner nozzle of a triple-tubular spinneret, and supplying the second dope solution to an outer nozzle of the triple-tubular spinneret, discharging the first dope solution and the second dope solution from the triple-tubular spinneret into a coagulation bath, and coagulating, in the coagulation bath, a spinning solution which has been discharged into the coagulation bath, and then winding and drying a coagulated resultant to obtain a hollow fiber membrane.

For components of the method of preparing a fiber membrane, which overlap the above-described components, a reference is made to the above descriptions.

According to an embodiment, the preparing of the first dope solution may include mixing the first polymer into a solvent.

According to an embodiment, in addition to the first polymer, the first dope solution may further include an additive compound in consideration of membrane-forming properties and moisture permeability. For example, the additive compound may include a polyvinylpyrrolidone compound. In this case, the additive compound in the first dope solution may be included in an amount of 1 to 5 wt%, for example, 2 to 4 wt% or 3 wt%.

According to an embodiment, the preparing of the second dope solution may include mixing the second polymer, the crown ether-based compound, and the antioxidant into a solvent.

According to an embodiment, in addition to the above-described components, the second dope solution may further include an additive compound in consideration of membrane-forming properties and moisture permeability. For example, the additive compound may include a polyvinylpyrrolidone compound. In this case, the additive compound in the second dope solution may be included in an amount of 1 to 5 wt%, for example, 2 to 4 wt% or 3 wt%.

The solvent may include at least one of a first solvent, a second solvent, and a third solvent. For example, the solvent may be a mixed solvent including two types of solvents of the first solvent, the second solvent, and the third solvent.

The first solvent may be a solvent that may not dissolve a polymer at room temperature (for example, 23 to 25 °C) but may dissolve the polymer at a high temperature (for example, 80 °C or more), and may include butanol, isobutanol, octanol, pentanol, isopentanol, dimethyl phthalate, diethyl phthalate, dibutyl phthalate, dioctyl phthalate, polyoxylethylene octylphenyl ether, or a combination thereof.

The second solvent may be a solvent that may not dissolve the polymer, and may include water, methanol, ethanol, isopropanol, acetone, hexane, pentane, benzene, toluene, carbon tetrachloride, o-dichlorobenzene, polyethylene glycol, or a combination thereof.

The third solvent may be a solvent that may dissolve the polymer even at room temperature, and may include N-methyl-2-pyrrolidone, dimethyl sulfoxide, dimethylacetamide, dimethylformamide, methyl ethyl ketone, tetrahydrofuran, tetramethylurea, or trimethyl phosphate.

Those of ordinary skill in the art may use any one of the first solvent, the second solvent, and the third solvent or a mixture of two or more solvents in consideration of the characteristics of a polymer and the preparation of a hollow fiber-type porous support having desired physical properties.

According to an embodiment, when the solvent is a mixed solvent of two or more types of solvents, a mixing ratio of the solvents may be in a range of 1:9 to 9:1 by weight, but is not limited thereto, and those of ordinary skill in the art may select an appropriate range in consideration of the amounts of a polymer and an antioxidant, the viscosity of a spinning solution, and the physical properties of a final hollow fiber membrane.

According to an embodiment, a solvent used in the preparing of the first dope solution and the second dope solution may include the third solvent. For example, the solvent used in the preparing of the first dope solution and the second dope solution may be the third solvent.

According to an embodiment, an amount of the first polymer included in the first dope solution may be in a range of 10 to 40 wt%. For example, an amount of the polymer may be in a range of 10 to 30 wt% or 15 to 25 wt%, but is not limited thereto, and those of ordinary skill in the art may select an appropriate amount range in consideration of the physical properties, gas permeability, or the like of a final hollow fiber membrane.

According to an embodiment, an amount of the second polymer included in the second dope solution may be in a range of 10 to 40 wt%. For example, an amount of the polymer may be in a range of 10 to 30 wt% or 15 to 25 wt%, but is not limited thereto, and those of ordinary skill in the art may select an appropriate amount range in consideration of the physical properties, gas permeability, or the like of a final hollow fiber membrane.

According to an embodiment, the first dope solution may be free of an inorganic material. For example, the first dope solution may substantially consist of an organic material.

According to an embodiment, the antioxidant may include a metal-based antioxidant.

If necessary, the second dope solution may further include at least one antioxidant of an organic-based antioxidant, an organo-metallic antioxidant, a HALS, a sulfur-based antioxidant, and a phosphorus-based antioxidant. In this case, an amount of the antioxidant included in the second dope solution man be appropriately selected and used within the above range in consideration of the amount of the crown ether-based compound, the physical properties of the hollow fiber membrane, and gas permeability.

According to an embodiment, a temperature at which the second polymer, the solvent, the crown ether-based compound, and the antioxidant are mixed in the obtaining of the second dope solution may be in a range of 20 to 80°C, and when the crown ether-based compound and the antioxidant are added, a temperature may be set in consideration of the solubility and viscosity of a dope.

According to an embodiment, a time required to mix the second dope solution may be in a range of 1 hour to 48 hours and may be set in consideration of the solubility and viscosity between the solvent, and the crown ether-based compound, and the antioxidant. For example, the time may be in a range of 3 hours to 40 hours, 6 hours to 35 hours, 9 hours to 30 hours, 12 hours to 25 hours, or 15 hours to 20 hours.

According to an embodiment, each of the first dope solution and the second dope solution may further include an additive in consideration of the moisture exchange performance, membrane-forming properties and porosity of the hollow fiber membrane, and the dispersibility and physical properties of the antioxidant.

For example, the additive may include at least one of polyethylene glycol, glycerin, diethyl glycol, triethylene glycol, ethanol, polyvinylpyrrolidone, water, zinc chloride, and lithium chloride.

According to an embodiment, a spinning solution of the first dope solution and the second dope solution may have a viscosity of 20,000 to 40,000, for example, 25,000 to 35,000 or 27,000 to 33,000 at a temperature of 35 °C. When the viscosity of the spinning solution satisfies the above range, smooth discharge of a hollow fiber spinning solution and uniform membrane formation may be achieved.

According to an embodiment, the discharging of the dope solution into the coagulation bath may include discharging the discharged solution by using a triple-tubular spinning device.

According to an embodiment, the triple-tubular spinning device may include a central portion that forms a hollow portion of a hollow fiber membrane, an inner nozzle that discharges a dope solution for forming an inner surface of the hollow fiber membrane, and an outer nozzle that discharges a dope solution for forming an outer surface of the hollow fiber membrane. In this case, discharge speeds of solutions discharged from the central portion, the inner nozzle, and the outer nozzle may be adjusted to be the same or different.

For example, discharge speeds of the inner nozzle and the outer nozzle may be the same. When the discharge speeds of the inner and outer nozzles are adjusted to be the same, thicknesses of an inner surface region and an outer surface region may be equal to each other.

According to an embodiment, a core solution may be supplied to a hollow portion of the triple-tubular spinneret. The core solution may be discharged into the coagulation bath together with the first dope solution and the second dope solution. In this case, a discharge speed of the core solution may be greater than a discharge speed of the first and second dope solutions.

According to an embodiment, the core solution may include a mixed solution of the second solvent and the third solvent. For example, the core solution may be prepared by mixing the second solvent and the third solvent in a volume ratio of 3:7 to 7:3. When the core solution satisfies the volume ratio of the above range, the antioxidant contained in the spinning solution may be incorporated into the hollow fiber membrane during a phase inversion process of a spinning material. For example, the core solution may be prepared by mixing the second solvent and the third solvent in a volume ratio of 5:5 to 7:3.

According to an embodiment, in the discharging of the spinning solution into the coagulation bath, a spinning temperature may be in a range of 20 to 80 °C, for example, 30 to 70 °C or 40 to 60 °C.

According to an embodiment, in the discharging of the spinning solution including the first dope solution and the second dope solution into the coagulation bath, a discharge speed may be in a range of 5 to 30 g/min and may be adjusted according to a diameter of a humidifying membrane and the purpose of a membrane. For example, the discharge speed may be in a range of 5 to 20 g/min or 5 to 15 g/min. When the discharge speed exceeds 40 g/min, it may be difficult to obtain the uniform thickness and porosity of the hollow fiber membrane, and when the discharge speed is less than 5 g/min, it may be difficult to obtain a uniform thickness, and nozzle clogging may occur.

According to an embodiment, the discharge speed of the core solution may be in a range of 10 to 30 g/mim and may be adjusted according to a diameter of a humidifying membrane and the purpose of a membrane. When the discharge speed exceeds 30 g/min, the hollow fiber membrane may not be sufficiently coagulated, which results in a thin thickness to cause an internal coagulation solution to be eluted and lost to an outer surface. When the discharge speed is less than 10 g/min, it may be difficult to obtain a uniform thickness, and the thickness may be excessively decreased.

After the spinning solution is discharged into the coagulation bath, the spinning solution is coagulated by a coagulation solution.

According to an embodiment, a spinning material discharged from the spinning device may come into contact with a coagulation solution in the coagulation bath through an air gap.

The air gap may be a region in which the spinning material comes into contact with air, and artificial cooling air may be supplied in consideration of the physical properties of the spinning material. For example, a length of the air gap may be set to 0.1 to 50 cm. The air gap is a section in which primary phase inversion occurs, and phase inversion occurs through exchange of moisture in the atmosphere with an organic solvent in the spinning solution. When the length of the air gap satisfies the above range, sufficient phase inversion may occur to obtain a hollow fiber membrane having a desired pore structure.

The spinning material passes through the air gap and comes into contact with the coagulation solution included in the coagulation bath, thereby solidifying to form a porous hollow fiber membrane.

According to an embodiment, the coagulation bath may be provided as one coagulation bath, but one or more embodiments are not limited thereto. The coagulation bath may be configured such that two or more coagulation baths are consecutively disposed. When there are two or more coagulation baths, coagulation solutions used in respective coagulation baths may be the same or different.

According to an embodiment, a coagulation solution provided to the coagulation bath serves to coagulate a discharged solution, which is discharged through a spinneret, into the form of a hollow fiber membrane, In this case, those of ordinary skill in the art may appropriately select and use a used coagulation solution from known coagulation solution.

For example, an acid solution, water, an organic solvent, and the like may be mixed and used as the coagulation solution.

According to an embodiment, a hollow fiber-type porous support obtained through the coagulation bath may undergo post-treatment.

According to an embodiment, the post-treatment may include chemical treatment and/or physical treatment.

For example, the chemical treatment in the post-treatment may be performed to remove and dry a coagulation solution included in pores after the hollow fiber-type porous support is formed, and may include water rinsing, washing, hot water treatment, or the like.

For example, the physical treatment in the post-treatment may include stretching, shrinking, or the like for controlling the size and shape of the pores inside the hollow fiber-type porous support to improve the strength and durability of the hollow fiber-type porous support.

A membrane humidifier for a fuel cell according to an aspect may include the hollow fiber membrane described above.

For the hollow fiber membrane, reference may be made to the above description, and hereinafter, a humidifier will be described with reference to FIGS. 1 and 2.

FIGS. 1 and 2 are perspective views of a humidifier 100 for a fuel cell, according to an embodiment of the present disclosure.

As shown in FIGS. 1 and 2, the humidifier 100 for a fuel cell of the present disclosure includes a middle case 110, a cap case 120, a fixing portion 130, and a hollow fiber membrane bundle 200.

The middle case 110 is coupled to the cap case 120 to form an exterior of the humidifier 100 for a fuel cell. The middle case 110 and the cap case 120 may consist of hard plastic such as polycarbonate, or metal. A cross section of the middle case 110 and the cap case 120 in a width direction may have a circular shape as shown in FIG. 1 or a polygonal shape as shown in FIG. 2. The polygonal shape may be a quadrangular shape, a square shape, a trapezoid shape, a parallelogram shape, a pentagonal shape, a hexagonal shape, or the like., and the polygonal shape may have rounded corners. In addition, the circular shape may be an oval shape.

In the middle case 110, a second fluid inlet 112 through which a second fluid is supplied and a second fluid outlet 113 through which the second fluid is discharged are each formed.

In FIGS. 1 and 2, a plurality of hollow fiber membranes 210 are illustrated as being disposed in the middle case 110 in the form of a single hollow fiber membrane bundle 200, but the hollow fiber membranes 210 may also be disposed in the middle case 110 while being divided and accommodated in two or more cartridges.

A fluid inlet/outlet 121 is formed in the cap case 120. The fluid inlet/outlet 121 formed in one of the cap cases 120 connected to opposite end portions of the middle case 110 serves as the first fluid inlet, and the fluid inlet/outlet 121 formed in the other one serves as the first fluid outlet. A first fluid flowing in through the fluid inlet/outlet 121 serving as the first fluid inlet passes through internal channels (that is, lumens) of the hollow fiber membranes 210 accommodated inside the middle case 110 and then is discharged through the fluid inlet/outlet 121 serving as the first fluid outlet.

End portions of the hollow fiber membranes 210 are potted in the fixing portion 130. The fixing portion 130 binds the hollow fiber membranes 210 and fills gaps between the hollow fiber membranes 210 and gaps between the hollow fiber membranes 210 and the middle case 110. Thus, each of the opposite end portions of the middle case 110 is blocked by the fixing portion 130, and a passage through which the second fluid passes is formed therein. A material of the fixing portion 130 is known, and a detailed description thereof is omitted herein.

## [Examples]

### Comparative Example 1 (reference membrane)

A dope solution of a hollow fiber membrane polymer composition included polyethersulfone (PES) (20 wt%), N-methyl-2-pyrrolidone (77 wt%), and 3 wt% of polyvinylpyrrolidone (PVP), a coagulation bath included a 60 °C coagulation solution (prepared by mixing water and NMP at a ratio of 7:3 wt%), and the same coagulation solution was used as an internal coagulation solution.

The dope solution and the internal coagulation solution were respectively discharged from a circular nozzle and a core of a double-tubular spinning device toward the coagulation bath, passed through the air over a length of about 10 cm between the spinning device and the coagulation bath, and then were coagulated in the coagulation bath to obtain a hollow fiber membrane.

A discharge speed of the dope solution was 20 g/min, and the internal coagulation solution was also discharged at a discharge speed of 20 g/min.

### Comparative Example 2 (including only cerium membrane without crown ether-based compound)

A hollow fiber membrane was prepared by using a triple-tubular spinning device as a discharge device.

A first dope solution was prepared by mixing PES (20 wt%), N-methyl-2-pyrrolidone (77 wt%), and 3 wt% of PVP. The first dope solution was supplied to an inner nozzle of a triple-tubular spinning device and discharged at a discharge speed of 10 g/min.

A second dope solution was prepared by mixing PES (20 wt%), N-methyl-2-pyrrolidone (77 wt%), and 3 wt% of PVP, and then adding and mixing 3 parts by weight of an antioxidant of cerium oxide ($CeO_2$) with respect to 100 wt% of PES. The second dope solution was supplied to an outer nozzle of the triple-tubular spinning device and discharged at a discharge speed of 10 g/min.

The same coagulation solution used in Comparative Example 1 was used as an internal coagulation solution of the triple-tubular spinning device. The first dope solution, the second dope solution, and the internal coagulation solution were respectively discharged from a circular nozzle and a core of the triple-tubular spinning device toward a coagulation bath, passed through the air over a length of about 10 cm between the spinning device and the coagulation bath, and then was coagulated in the coagulation bath to obtain a hollow fiber membrane.

The internal coagulation solution was discharged at a discharged speed of 20 g/min.

### Comparative Example 3 (entirely including crown ether-based compound+only cerium membrane)

A dope solution of a hollow fiber membrane polymer composition was obtained by mixing PES (20 wt%), N-methyl-2-pyrrolidone (N-Methyl-2-pyrrolidone) (77 wt%), and 3 wt% of polyvinylpyrrolidone (PVP), and adding and mixing 2 wt% of a crown ether-based compound of 18-crown-6-2,3,11,12-tetracarboxylic acid and 3 wt% of an antioxidant of cerium oxide ($CeO_2$) with respect to 100 wt% of the PES. The coagulation bath included a 60°C coagulation solution (prepared by mixing water and NMP in a ratio of 7:3 wt%), and the same coagulation solution was used as an internal coagulation solution.

The dope solution and the internal coagulation solution were respectively discharged from a circular nozzle and a core of a double-tubular spinning device toward the coagulation bath, passed through the air over a length of about 10 cm between the spinning device and the coagulation bath, and then were coagulated in the coagulation bath to obtain a hollow fiber membrane.

A discharge speed of the dope solution was 20 g/min, and the internal coagulation was also discharged at a discharge speed of 20 g/min.

### Example 1 (18-crown-6-2,3,11,12-tetracarboxylic acid)

A hollow fiber membrane was prepared by using a triple-tubular spinning device as a discharge device.

A first dope solution was prepared by mixing PES (20 wt%), N-methyl-2-pyrrolidone (77 wt%), and 3 wt% of PVP. The first dope solution was supplied to an inner nozzle of a triple-tubular spinning device and discharged at a discharge speed of 10 g/min.

A second dope solution was prepared by mixing PES (20 wt%), N-methyl-2-pyrrolidone (77 wt%), and 3 wt% of PVP, and then adding and mixing 2 parts by weight of a crown ether-based compound of 18-crown-6-2,3,11,12-tetracarboxylic acid and 3 parts by weight of an antioxidant of cerium oxide ($CeO_2$) with respect to 100 parts by weight of the PES. The second solution was supplied to an outer nozzle of the triple-tubular spinning device and discharged at a discharge speed of 10 g/min.

The same coagulation solution used in Comparative Example 1 was used as an internal coagulation solution of the triple-tubular spinning device. The first dope solution, the second dope solution, and the internal coagulation solution were respectively discharged from a circular nozzle and a core of the triple-tubular spinning device toward a coagulation bath, passed through the air over a length of about 10 cm between the spinning device and the coagulation bath, and then was coagulated in the coagulation bath to obtain a hollow fiber membrane.

The internal coagulation solution was discharged at a discharged speed of 20 g/min.

### Example 2 (2-aminomethyl-18-crown-6)

A hollow fiber was prepared in the same manner as in Example 1, except that 2-aminomethyl-18-crown-6 was used instead of 18-crown-6-2,3,11,12-tetracarboxylic acid.

### Evaluation Example 1 (Evaluation of antioxidant effect)

An antioxidant effect was evaluated by modularizing 1,000 strands(effective length: 25 cm) of humidifying membranes prepared in Comparative Examples 1 to 3 and Examples 1 and 2. Performance evaluation was performed for 120 hours by allowing wet air (1,000 standard liters per minute (slpm), 70 °C, relative humidity (RH) of 100 %) and dry air (1,000 slpm, 70 °C) to flow in a counter flow, and introducing, at a speed of 10 cc/min, a Fenton solution (5 % $H_2O_2$, 2 ppm $FeSO_4$) into wet air entering a shell side of a membrane humidifier. Thereafter, a molecular weight reduction value and an internal leak value of membranes used in an experiment are shown in Table 1.

(Internal leak refers to an amount of gas that flows out to an outer surface through a humidifying membrane when 0.5 barg of pressure is applied to the inside of the membrane, and an internal leak value increases as a damage to the membrane becomes greater).

**Evaluation Example** 2 - **Evaluation of humidification performance**

Humidification performance was evaluated by modularizing 1,000 strands(effective length: 25 cm) of the humidifying membranes prepared in Comparative Examples 1 to 3 and Examples 1 and 2. Performance evaluation was performed by allowing wet air (2,000 slpm, 70 °C, RH of 100 %) and dry air (2,000 slpm, 70 °C) to meet in a counter flow, and performance was determined based on a dew point. Results thereof are shown in Table 2.

[Table 1]

| | 24 hr | | 48 hr | | 72 hr | | 96 hr | | 120 hr | |
|---|---|---|---|---|---|---|---|---|---|---|
| | Number average molecular weight reduction rate (Mn, %) | Internal leak (slpm) | Number average molecular weight reduction rate (Mn, %) | Internal leak (slpm) | Number average molecular weight reduction rate (Mn, %) | Internal leak (slpm) | Number average molecular weight reduction rate (Mn, %) | Internal leak (slpm) | Number average molecular weight reduction rate (Mn, %) | Internal leak (slpm) |
| Comparative Example 1 | 8 | 20.2 | 15 | 30.8 | 20 | 43.5 | 26 | 62.2 | 35 | 80.2 |
| Comparative Example 2 | 1 | 2.4 | 4 | 6.2 | 14 | 28.2 | 22 | 47.3 | 29 | 69.8 |
| Comparative Example 3 | 1 | 2.2 | 2 | 3.3 | 4 | 5.5 | 5 | 6.8 | 8 | 8.7 |
| Example 1 | 1 | 2.1 | 2 | 3.5 | 5 | 5.9 | 6 | 7.3 | 9 | 9.4 |
| Example 2 | 1 | 2.6 | 3 | 4.8 | 5 | 6.8 | 7 | 8.1 | 11 | 11.2 |

It was confirmed that, as compared to Comparative Example 1, the number-average molecular weight reduction rate was significantly reduced in Comparative Examples 2 and 3 and Examples 1 and 2, in which an antioxidant was mixed.

Referring to Comparative Example 2, it was confirmed that even when an antioxidant was used, the antioxidant effect was significantly reduced after 72 hours when the antioxidant was used alone without a crown ether-based compound. This is considered to be due to the loss of the antioxidant over time caused by elution, due to the absence of the crown ether-based compound.

In Comparative Example 3 in which a hollow fiber membrane included a crown ether-based compound and an antioxidant throughout the hollow fiber membrane, the antioxidant effect was similar to that of Examples 1 and 2.

[Table 2]

|  | Dew point (°C) |
| --- | --- |
| Comparative Example 1 | 51.2 |
| Comparative Example 2 | 49.3 |
| Comparative Example 3 | 46.5 |
| Example 1 | 49.8 |
| Example 2 | 49.6 |

It was confirmed that, in Comparative Example 1 which did not include both a crown ether-based compound and an antioxidant, a dew point was highest, which meant a reference value suitable for use in a hollow fiber membrane humidifier.

It was confirmed that, in Comparative Example 2 which was prepared by using a triple spinneret and includes an antioxidant alone only in an outer surface region, a dew point value was similar to that of Comparative Example 1, but in Comparative Example 3 which was prepared by using a double spinneret and included a crown ether-based compound and an antioxidant throughout the hollow fiber membrane, a dew point value was decreased to a level that was unfavorable for use in a membrane humidifier.

Examples 1 and 2, which were prepared by using a triple spinneret and included a crown ether-based compound and an antioxidant in an outer surface region, had a dew point value similar to that of Comparative Example 1 and were determined to have sufficient moisture exchange performance for use in a membrane humidifier.

Comprehensively determining these results, it is determined that a crown ether-based compound captures particles of an antioxidant to prevent elution of the particles to impart an oxidation resistance enhancement effect, but amounts of a crown ether-based compound and an antioxidant added to obtain a sufficient oxidation resistance enhancement effect has a trade-off effect of closing pores of a hollow fiber membrane to deteriorate moisture exchange performance. However, when a hollow fiber membrane was prepared by using a triple spinneret to provide a crown ether-based compound and an antioxidant only to an outer surface of a hollow fiber membrane, it was possible to simultaneously achieve a level of moisture exchange performance applicable to a membrane humidifier, and a sufficient antioxidant effect.

**Claims**

1. A hollow fiber membrane for a fuel cell membrane humidifier, the hollow fiber membrane comprising a hollow fiber-type porous support which comprises an inner surface region and an outer surface region,

   wherein the inner surface region comprises a first polymer, and
   the outer surface region comprises a second polymer, a crown ether-based compound, and an antioxidant.

2. The hollow fiber membrane of claim 1, wherein the inner surface region is defined as a region from an inner surface, which defines a hollow region of the hollow fiber-type porous support through which external air passes, to a point corresponding to 10 % to 90 % of a thickness of the hollow fiber-type porous support, and
   the outer surface region is defined as a region from a surface, which is opposite to the inner surface, to a point corresponding to 10 % to 90 % of the thickness of the hollow fiber-type porous support.

3. The hollow fiber membrane of claim 1, wherein the inner surface region is free of an inorganic material.

4. The hollow fiber membrane of claim 2, wherein the hollow fiber-type porous support further comprises an intermediate region between the inner surface region and the outer surface region, and

the intermediate region comprises at least one of a crown ether-based compound and an antioxidant.

5. The hollow fiber membrane of claim 4, wherein a concentration of the at least one of the crown ether-based compound and the antioxidant in the intermediate region increases from a region adjacent to the inner surface region to a region adjacent to the outer surface region.

6. The hollow fiber membrane of claim 1, wherein the first polymer and the second polymer each independently comprise a polyvinylidene fluoride (PVDF)-based polymer, a polysulfone-based polymer, a sulfonated polysulfone, cellulose acetate, cellulose triacetate, polymethyl methacrylate, Nafion, a polystyrene (PS)-based polymer, a polytetrafluoroethylene (PTFE)-based polymer, a perfluorosulfonic acid (PFSA)-based polymer, a polyphenylsulfone-based polymer, a polyethersulfone (PES)-based polymer, a polyacrylonitrile (PAN)-based polymer, a polyetherimide (PEI)-based polymer, a polyimide (PI)-based polymer, or any combination thereof.

7. The hollow fiber membrane of claim 1, wherein the crown ether-based compound is included in an amount of 0.1 parts by weight to 5 parts by weight with respect to 100 parts by weight of the second polymer.

8. The hollow fiber membrane of claim 1, wherein the antioxidant is included in an amount of 0.1 parts by weight to 5 parts by weight with respect to 100 parts by weight of the second polymer.

9. The hollow fiber membrane of claim 1, wherein the crown ether-based compound and the antioxidant are included in a weight ratio of 1:1 to 1:2.

10. The hollow fiber membrane of claim 1, wherein the hollow fiber-type porous support has a thickness of 40 to 300 $\mu$m.

11. The hollow fiber membrane of claim 1, wherein the crown ether-based compound has a molecular structure represented by Formula 1 below:

$$\text{Formula 1} \qquad \text{3n-crown-n,}$$

wherein, in Formula 1, n is a positive integer from 4 to 8.

12. The hollow fiber membrane of claim 1, wherein the antioxidant comprises a metal-based antioxidant.

13. The hollow fiber membrane of claim 1, wherein the metal-based antioxidant comprises compounds capable of releasing at least one ion of a cerium ion, a nickel ion, a tungsten ion, a cobalt ion, a chromium ion, a zirconium ion, a yttrium ion, a manganese ion, an iron ion, a titanium ion, a vanadium ion, a molybdenum ion, a lanthanum ion, a neodymium ion, a silver ion, a platinum ion, a ruthenium ion, a palladium ion, and a rhodium ion, or any combination of the compounds.

14. A membrane humidifier for a fuel cell, comprising the hollow fiber membrane of any one of claims 1 to 13.

15. A method of preparing a hollow fiber membrane for a fuel cell humidifier, the method comprising:

preparing a first dope solution comprising a first polymer;
preparing a second dope solution comprising a second polymer, a crown ether-based compound, and an antioxidant;
supplying the first dope solution to an inner nozzle of a triple-tubular spinneret, and supplying the second dope solution to an outer nozzle of the triple-tubular spinneret;
discharging the first dope solution and the second dope solution from the triple-tubular spinneret into a coagulation bath; and
coagulating, in the coagulation bath, a spinning solution which has been discharged into the coagulation bath, and then winding and drying a coagulated resultant to obtain a hollow fiber membrane.

16. The method of claim 15, wherein the antioxidant comprises a metal-based antioxidant.

17. The method of claim 15, wherein the first dope solution is free of an inorganic material.

18. The method of claim 15, wherein the crown ether-based compound is included in an amount of 0.1 parts by weight to 5 parts by weight with respect to 100 parts by weight of the second polymer.

19. The method of claim 15, wherein the antioxidant is included in an amount of 0.1 parts by weight to 5 parts by weight with respect to 100 parts by weight of the second polymer.

20. The method of claim 15, wherein a core solution is supplied to a hollow portion

of the triple-tubular spinneret, and
the core solution is discharged into the coagulation bath together with the first dope solution and the second dope solution.

# FIG. 1

# FIG. 2

## INTERNATIONAL SEARCH REPORT

International application No.

**PCT/KR2024/015888**

### A. CLASSIFICATION OF SUBJECT MATTER

**H01M 8/04119**(2016.01)i; **B01D 63/02**(2006.01)i; **B01D 67/00**(2006.01)i; **H01M 8/10**(2006.01)i

According to International Patent Classification (IPC) or to both national classification and IPC

### B. FIELDS SEARCHED

Minimum documentation searched (classification system followed by classification symbols)

H01M 8/04119(2016.01); B01D 61/02(2006.01); B01D 61/22(2006.01); B01D 63/02(2006.01); B01D 71/00(2006.01); D01F 6/94(2006.01); H01M 8/04(2006.01); H01M 8/10(2006.01); H01M 8/106(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 중공사막(hollow fiber membrane), 연료전지(fuel cell), 다공성 지지체(porous support), 크라운 에테르계 화합물(crown ether compound), 산화방지제(antioxidant), 도프 용액(dope solution)

### C. DOCUMENTS CONSIDERED TO BE RELEVANT

| Category* | Citation of document, with indication, where appropriate, of the relevant passages | Relevant to claim No. |
|---|---|---|
| A | KR 10-2023-0095237 A (AIRRANE CO., LTD.) 29 June 2023 (2023-06-29)<br>See abstract; and paragraphs [0029], [0032], [0036], [0047] and [0053]. | 1-20 |
| A | KR 10-2023-0081646 A (KOLON INDUSTRIES, INC.) 07 June 2023 (2023-06-07)<br>See claims 1, 2 and 4. | 1-20 |
| A | JP 2007-162176 A (NISSAN MOTOR CO., LTD.) 28 June 2007 (2007-06-28)<br>See claims 1-8. | 1-20 |
| A | KR 10-2017-0035247 A (LG CHEM, LTD.) 30 March 2017 (2017-03-30)<br>See claims 1-4 and 9-11. | 1-20 |
| A | JP 09-136019 A (ASAHI CHEM. IND. CO., LTD.) 27 May 1997 (1997-05-27)<br>See paragraphs [0007] and [0008]. | 1-20 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 January 2025** | **24 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/015888** |

| Patent document cited in search report | | | Publication date (day/month/year) | Patent family member(s) | | | Publication date (day/month/year) |
| --- | --- | --- | --- | --- | --- | --- | --- |
| KR | 10-2023-0095237 | A | 29 June 2023 | KR | 10-2641316 | B1 | 28 February 2024 |
| KR | 10-2023-0081646 | A | 07 June 2023 | | None | | |
| JP | 2007-162176 | A | 28 June 2007 | | None | | |
| KR | 10-2017-0035247 | A | 30 March 2017 | KR | 10-2010402 | B1 | 13 August 2019 |
| JP | 09-136019 | A | 27 May 1997 | | None | | |

Form PCT/ISA/210 (patent family annex) (July 2022)